# EUROPEAN PATENT SPECIFICATION

(11) **EP 0 853 910 B1**
(45) Date of publication and mention of the grant of the patent: **19.01.2000**
(21) Application number: 98300220.5
(22) Date of filing: 10.01.1998
(51) Int. Cl.: A47J 37/12, A47J 36/38

(54) **Domestic cooking appliance**
Haushalts-Kochgerät
Dispositif de cuisson domestique

(30) Priority: 18.01.1997 GB 9701040
(43) Date of publication of application: 22.07.1998
(73) Proprietor: Kenwood Marks Limited, Havant, Hampshire PO9 2NH (GB)
(72) Inventor: Gurney, Russell John, Fareham, Hampshire, PO16 7RJ (GB); Tong, Paul Charles, Havant, Hampshire, P09 2BA (GB)
(74) Representative: Marsh, Robin Geoffrey

(56) References cited:
- DE-U- 8 107 240
- DE-U- 9 312 133
- FR-A- 2 598 606

## Description

This invention relates to domestic cooking appliances and finds particular, though not exclusive, application to deep fryers.

It is conventional, in domestic deep fryers, to have a metallic bowl or tank in which oil or fat or some other medium is heated and into which food to be cooked can be suspended in a basket. The bowl is usually provided with a high-powered heating element, rated for example at 3kW, secured directly to the underside of its base to ensure efficient thermal transfer from the element to the oil or other cooking medium in the bowl. Typically, the bowl (and the attached heating element) is housed in an outer casing from which it can be removed for cleaning.

The outer casing contains, or can have attached to it (removeably or otherwise), various electrical components, such as power supply interconnects, thermostats and thermal fuses, all of which can conveniently communicate with the bowl and/or the heating element in the manner described in our co-pending GB patent application No 9701039.1.

The outer casing is closed by a lid which is preferably hinged and contains, at least over part of its area overlying the bowl, means such as louvres to permit hot gases created by the cooking process to escape to avoid the risk of a build up of pressure in the appliance. Typically, the hot gases are filtered or treated in some way as they exit the appliance through the lid, to reduce their grease and moisture content. Such a cooking appliance, as disclosed in the preamble of claim 1, is known from DE-U-9312133.

It is conventional to fit a seal between the lid and the bowl for several reasons:
(a) to reduce or prevent condensation, which collects on the side wall of the lid, from leaking out and running down the outside of the outer casing of the fryer, causing staining and discolouration;
(b) to act as a thermal break between the top of the bowl and the lid; and
(c) to resist the exit of hot gases from the body-to-lid interface.

From the standpoint of economy, however, as well as convenience for the user, it is desirable to omit the aforementioned seal, and it is an object of this invention to provide an electrically-heated appliance, such as a deep fryer, with a lid assembly which performs all or at least a major part of the functions hereinbefore attributed to the seal, making such omission possible.

According to the invention there is provided a domestic cooking appliance comprising a casing housing a container in which food is to be cooked, and a heater for said container, the casing having a lid overlying the container, wherein the lid comprises an external wall and an inner liner spaced therefrom, a region of said liner and a corresponding region of said external wall being vented to permit hot gases to escape from the container, characterised by the external wall of said lid being vented in a further region thereof, and by the provision of air passages allowing ambient air to enter between the casing and the lid and to exit through the further vented region of said external wall of the lid.

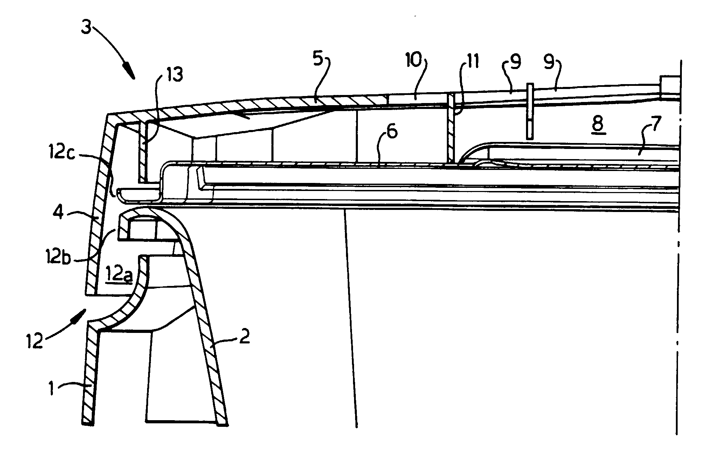

In order that the invention may be clearly understood and readily carried into effect, one embodiment thereof will now be described, by way of example only, with reference to the accompanying drawing, the single figure of which shows a cross-sectional view through part of an appliance in accordance with one embodiment of the invention.

Referring now to the drawing, part of the outer casing, or main body, of the appliance is shown at 1. The casing is conveniently formed of plastics material and will, of course, be configured as desired in accordance with the overall external appearance of the appliance. Part of the metal bowl is shown at 2, and a portion of the lid assembly which surmounts the appliance is shown generally at 3.

The lid assembly 3 includes an outer component, of plastics material, which includes side wall portions such as that shown at 4, and a top face, forming the major part of the lid surface as shown in part at 5. The lid assembly contains a metallic liner 6 which, over the central region thereof (i.e. that overlying the central area of the bowl 2) is louvred or otherwise vented as shown at 7 to enable hot gases from the bowl to exit the appliance through a filter medium (not shown) retained in the area 8 and filter area vents, such as those shown at 9, in the top surface 5 of the lid assembly 3.

Surrounding the filter area vents such as 9 are, in accordance with this embodiment of the invention, flue vents such as 10; a partitioning rib 11 separating the filter venting region from the flue venting region. It is highly preferable, for reasons that will be explained hereinafter, that the flue vents such as 10 are located closely proximate to the partitioning rib 11 and thus to the outermost of the filter vents 9.

It will be seen that there is no seal between the bowl 2 and the liner 6 of the lid assembly 3. However, in order to address the issues identified as (a), (b), and (c) above, the lid assembly 3 is constructed so that there is an air passage 12 allowing cool air from outside of the appliance to be drawn into the appliance and mix with some of the hot gases generated therein. The passage 12 comprises a portion 12a between the sidewall 4 of the lid assembly 3 and the top region of the body part 1, a portion 12b between the outer periphery of the bowl 2 and the sidewall 4, and a portion 12c which constitutes a mixing region for the cool air from outside the appliance with hot gases passing between the top of the bowl 2 and the underside of the lid liner 6. The mixed air and hot gases then flow, optionally being diverted through a tortuous path by a rib member 13 (which can be omitted if desired), across the undersurface of the plastic lid part 5 to exit the appliance via the flue vent 10.

The construction described ensures that, in at least the peripheral area of the lid assembly, which is that part likely to be grasped by a user of the appliance to open or close the lid, the undersurface thereof is not exposed to hot gases directly exiting the bowl 2. The gases which flow in that peripheral region have been cooled by their interaction with ambient air entering the appliance via passage 12 and thus the appliance exhibits so-called "cool wall" attributes in those areas of the lid which are likely to be touched by the user in normal operation of the appliance. The central part of the outer surface of the lid assembly, i.e. that containing the filter vents 9, will run hotter since the presence of the partitioning rib 11 prevents the cooler gases from mixing in that area, but there is no incentive for a user to touch or grasp the central region of the lid assembly, so this is of little consequence.

It will be understood that the closer the flue vent 10 is located to the partitioning rib 11, the broader is the area of the lid assembly which is cooled by the flow of gases that have mixed with ambient air. Thus the flue vent 10 is, as mentioned previously, placed as close as convenient to the rib 11, and the latter is positioned as close as is convenient to the outermost of the filter vents 9.

As mentioned previously, the outer rib 13 may be omitted altogether, or it may be made shorter and/or apertured or vented so as to cause some of the mixed gas and air to follow a less tortuous path than that indicated in the drawing. The primary function of the rib 13 is to prevent ingress of debris to the cavity between the lid and its metallic liner.

The filter medium utilised in areas 8 can be of any convenient form, such as a mesh, active carbon or a slit plate designed to extract most of the moisture and oil in suspension.

The construction and configuration of the appliance shown and described herein is such that there is no direct communication between the gases exiting via the flue vents 10 and those exiting via the filter vents 9 other than that which occurs within the bowl 2 and whatever communication may occur after venting from the appliance. A "curtain" of cooler gases from vents 10 thus surrounds the hotter gases exiting from vents 9.

## Claims

1. A domestic cooking appliance comprising a casing (1) housing a container (2) in which food is to be cooked, and a heater for said container, the casing having a lid (3) overlying the container, wherein the lid comprises an external wall (5) and an inner liner (6) spaced therefrom, a region of said liner and a corresponding region of said external wall being vented (7,9) to permit hot gases to escape from the container, characterised by the external wall (5) of said lid (3) being vented in a further region thereof (10), and by the provision of air passages (12) allowing ambient air to enter between the casing (1) and the lid (3) and to exit through the further vented region (10) of said external wall (5) of the lid.

2. An appliance according to Claim 1 characterised in that the vented region (7) of the liner (6) and the first mentioned vented region (9) of the external wall (5) of the lid (3) are disposed to overlie a central region of said container (2).

3. An appliance according to Claim 2 characterised in that the further vented region (10) of said external wall (5) surrounds the first-mentioned vented region (9) of said external wall (5).

4. An appliance according to any preceding claim characterised by the provision of a partitioning rib (11) extending across the space between said external wall (5) of the lid (3) and the inner liner (6) thereof and separating said further vented region (10) from the first-mentioned vented region (9) of said external wall (5).

5. An appliance according to any preceding claim characterised in that filter material is disposed in a space (8) between the vented region (7) in said liner (6) and the first-mentioned vented region (9) of the external wall (5) of the lid (3).

6. An appliance according to any preceding claim characterised in that the passage (12) comprises a first portion (12a) disposed between the casing (1) and a down-turned portion (4) of the lid (3) and a second portion (12b) disposed between the periphery of the container (2) and said down-turned lid portion (4).

7. An appliance according to Claim 6 characterised in that said path (12) further includes a third portion (12c) providing a mixing region in which said ambient air can mix with hot gases exiting transversely into the passage (12) from the container (2) beneath the outer part of the inner lining (6).

8. An appliance according to any preceding claim characterised by the provision of a further rib member (13) on the lid (3) and in the path from said passage (12) to the further vented region (10) of the external wall (5) of said lid (3).

9. An appliance according to any preceding claim constituting a domestic deep fryer.

## Patentansprüche

1. Haushalts-Kochgerät, enthaltend eine Hülle (1) mit einem darin eingesetzten Behälter (2) zum Kochen von Lebensmitteln darin und eine Heizvorrichtung für den Behälter, wobei die Hülle einen über dem Behälter liegenden Deckel (3) aufweist, wobei der Deckel eine Außenwand (5) und eine davon beabstandete innere Einlage (6) umfaßt, wobei ein Bereich der Einlage und ein korrespondierender Bereich der Außenwand mit Lüftungsöffnungen (7, 9) versehen ist, um heißen Gasen das Entweichen aus dem Behälter zu ermöglichen, dadurch gekennzeichnet, daß die Außenwand (5) des Deckels (3) in einem weiteren Bereich davon (10) mit Lüftungsöffnungen versehen ist, und dadurch, daß Luftwege (12) vorgesehen sind, die es erlauben, daß Raumluft zwischen die Hülle (1) und den Deckel (3) eintritt und durch den weiteren mit Lüftungsöffnungen versehenen Bereich (10) der Außenwand (5) des Deckels austritt.

2. Gerät nach Anspruch 1, dadurch gekennzeichnet, daß der mit Lüftungsöffnungen versehene Bereich (7) der Einlage (6) und der erstgenannte mit Lüftungsöffnungen versehene Bereich (9) der Außenwand (5) des Deckels (3) so angeordnet sind, daß sie über einem mittigen Bereich des Behälters (2) liegen.

3. Gerät nach Anspruch 2, dadurch gekennzeichnet, daß der weitere mit Lüftungsöffnungen versehene Bereich (10) der Außenwand (5) den erstgenannten mit Lüftungsöffnung versehenen Bereich (9) der Außenwand (5) umgibt.

4. Gerät nach einem der vorgenannten Ansprüche, dadurch gekennzeichnet, daß eine Trenn-Rippe (11) vorgesehen ist, die sich über den Zwischenraum zwischen der Außenwand (5) des Deckels (3) und der inneren Einlage (6) davon erstreckt und den weiteren mit Lüftungsöffnungen versehenen Bereich (10) von dem erstgenannten mit Lüftungsöffnungen versehenen Bereich (9) der Außenwand (5) trennt.

5. Gerät nach einem der vorstehenden Ansprüche, dadurch gekennzeichnet, daß Filtermaterial in einem Zwischenraum (8) zwischen dem mit Lüftungsöffnungen versehenen Bereich (7) in der Einlage (6) und dem erstgenannten mit Lüftungsöffnungen versehenen Bereich (9) der Außenwand (5) des Deckels (3) angeordnet ist.

6. Gerät nach einem der vorstehenden Ansprüche, dadurch gekennzeichnet, daß die Passage (12) einen ersten zwischen der Hülle (1) und einem nach unten gekehrten Teil (4) des Dekkels angeordneten ersten Teil (12a) und einen zwischen der Peripherie des Behälters (2) und dem nach unten gekehrten Deckelteil (4) angeordnetes zweites Teil (12b) enthält.

7. Gerät nach Anspruch 6, dadurch gekennzeichnet, daß der Weg (12) weiterhin ein drittes Teil (12c) beinhaltet, welches einen Vermischungsbereich zur Verfügung stellt, in welchem sich die Raumluft mit heißen Gasen vermischen kann, welche quer in die Passage (12) aus dem Behälter (2) unterhalb des äußeren Teils der inneren Einlage (6) austreten.

8. Gerät nach einem der vorstehenden Ansprüche, dadurch gekennzeichnet, daß ein weiteres Rippenteil (13) an dem Deckel (3) und in dem Weg von der Passage (12) zu der weiteren mit Lüftungsöffnungen versehenen Region (10) der Außenwand (5) des Deckels (3) vorgesehen ist.

9. Gerät nach einem der vorstehenden Ansprüche, welches eine Haushalts-Fritöse darstellt.

## Revendications

1. Un appareil de cuisson domestique comprenant un boîtier (1) logeant un récipient (2) dans lequel des aliments doivent être cuits, et un élément chauffant pour ledit récipient, le boîtier ayant un couvercle (3) recouvrant le récipient, dans lequel le couvercle comprend une paroi extérieure (5) et un revêtement intérieur (6) placé à distance de celle-ci, une zone dudit revêtement et une zone correspondante de ladite paroi externe étant dotée d'une aération (7, 9) pour permettre aux gaz chauds de s'échapper du récipient, caractérisé par le fait que la paroi extérieure (5) dudit couvercle (3) est aérée dans une autre zone (10) de celle-ci, et par le fait de prévoir des passages d'air (12) permettant à de l'air ambiant de pénétrer entre le boîtier (1) et le couvercle (3) et de sortir en passant par l'autre zone aérée (10) de ladite paroi externe (5) du couvercle.

2. Un appareil selon la revendication 1, caractérisé en ce que la zone (7) aérée du revêtement (6) et la zone aérée (9) mentionnée en premier de la paroi externe (5) du couvercle (3) sont disposées pour couvrir une zone centrale dudit récipient (2).

3. Un appareil selon la revendication 2, caractérisé en ce que l'autre zone aérée (10) de ladite paroi externe (5) entoure la zone aérée (9) mentionnée en premier de ladite paroi externe (5).

4. Un appareil selon l'une quelconque des revendications précédentes, caractérisé par le fait de prévoir une nervure de cloisonnement (11) qui s'étend sur l'espace situé entre ladite paroi externe (5) du couvercle (3) et le revêtement intérieur (6) de cette paroi et qui sépare ladite autre zone aérée (10) de la zone aérée (9) mentionnée en premier de ladite paroi externe (5).

5. Un appareil selon l'une quelconque des revendications précédentes, caractérisé en ce que du matériau filtrant est disposé dans un espace (8) situé entre la zone aérée (7) dans ledit revêtement (6) et la zone aérée (9) mentionnée en premier de la paroi externe (5) du couvercle (3).

6. Un appareil selon l'une quelconque des revendications précédentes, caractérisé en ce que le passage (12) comprend une première partie (12a) disposée entre le boîtier (1) et une partie (4), tournée vers le bas, du couvercle (3), et une deuxième partie (12b), disposée entre la périphérie du récipient (2) et ladite partie de couvercle (4) tournée vers le bas.

7. Un appareil selon la revendication 6, caractérisé en ce que ledit chemin (12) comprend en outre une troisième partie (12c) créant une zone de mélange dans laquelle ledit air ambiant peut se mélanger avec les gaz chauds sortant transversalement dans le passage (12), depuis le récipient (2) sous la partie extérieure du revêtement intérieur (6).

8. Un appareil selon l'une quelconque des revendications précédentes, caractérisé par le fait de prévoir un autre organe formant nervure (13) sur le couvercle (3) et dans le chemin allant dudit passage (12) à ladite autre zone aérée (10) de la paroi externe (5) dudit couvercle (3).

9. Un appareil selon l'une quelconque des revendications précédentes, constituant une friteuse domestique profonde.
